# FASCICULE DE BREVET EUROPEEN

(11) **EP 0 990 934 B1**
(45) Date de publication et mention de la délivrance du brevet: **29.12.2004**
(21) Numéro de dépôt: 99402340.6
(22) Date de dépôt: 24.09.1999
(51) Int. Cl.: G02B 7/04, G03B 3/02

(54) **Dispositif de montage d'un système optique mobile selon son axe**
Montagevorrichtung für ein in Richtung seiner Axe bewegbares optisches System
Device for monting an optical system movable along its axis

(30) Priorité: 28.09.1998 FR 9812074
(43) Date de publication de la demande: 05.04.2000
(73) Titulaire: AEROSPATIALE MATRA, 75781 Paris Cédex 16 (FR)
(72) Inventeur: Durand, François, 78114 Magny les Hameaux (FR)
(74) Mandataire: Poulin, Gérard

(56) Documents cités:
- US-A- 3 674 343
- US-A- 4 148 562
- US-A- 5 719 712
- PATENT ABSTRACTS OF JAPAN vol. 008, no. 233 (P-309), 26 octobre 1984 (1984-10-26) & JP 59 111117 A (CANON KK), 27 juin 1984 (1984-06-27)
- PATENT ABSTRACTS OF JAPAN vol. 008, no. 141 (P-283), 30 juin 1984 (1984-06-30) & JP 59 040608 A (HITACHI SEISAKUSHO KK), 6 mars 1984 (1984-03-06)

## Description

### Domaine technique

L'invention concerne un dispositif destiné à permettre le montage d'un système optique, tel qu'un objectif d'un appareil optique, sur une pièce support, avec possibilité de déplacement du système optique selon son axe.

Le dispositif selon l'invention peut être utilisé dans tous les appareils optiques comportant un système optique mobile selon son axe.

### Etat de la technique

Dans les appareils optiques existants, on connaît actuellement trois montages possibles pour permettre le déplacement linéaire d'un système optique selon son axe.

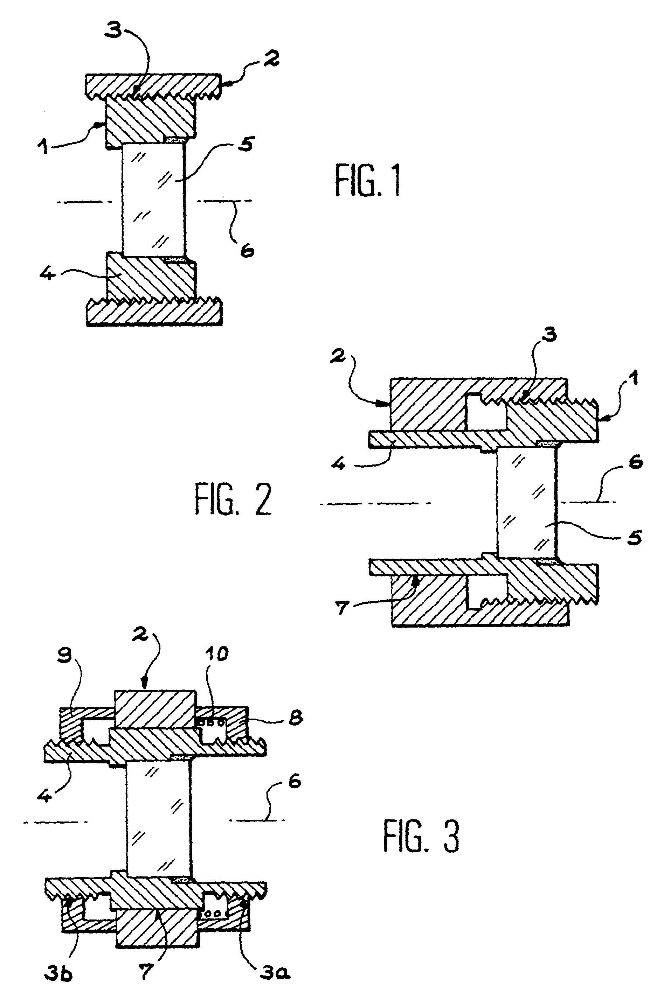

Un premier montage connu, illustré schématiquement en coupe longitudinale par la figure 1 des dessins annexés, consiste à monter directement le système optique 1 dans la pièce support 2 par une simple liaison 3 de type vis-écrou. Plus précisément, le système optique 1 comprend une bague 4 dans laquelle une lentille 5 est fixée par collage. La surface extérieure cylindrique de la bague 4 est filetée, de façon à être en prise directement dans un taraudage usiné dans la pièce support 2. Le déplacement du système optique 1, selon son axe optique 6, est obtenu en faisant tourner le système optique dans l'un ou l'autre sens autour de cet axe.

Dans un montage de ce type, le système optique ne coopère avec la pièce support que par la liaison de type vis-écrou. Par conséquent, un centrage précis du système optique dans la pièce support n'est pas réellement assuré.

La figure 2 des dessins annexés est une coupe longitudinale qui représente un deuxième type de montage connu, permettant de palier l'inconvénient du montage de la figure 1.

Dans le montage de la figure 2, le système optique 1 coopère avec la pièce support 2 par une liaison 3 du type vis-écrou, comme dans le montage illustré sur la figure 1. En outre et afin d'assurer la fonction de centrage désirée, le système optique 1 coopère également avec la pièce support 2 par deux surfaces de centrage cylindriques complémentaires, coopérant étroitement l'une avec l'autre. La zone de centrage matérialisée par ces surfaces de centrage complémentaires est désignée par la référence 7 sur la figure 2. Comme le filetage de la liaison 3 du type vis-écrou, la surface de centrage cylindrique du système optique 1 est formée sur la bague 4 dans laquelle est montée la lentille 5. Comme précédemment, le déplacement du système optique 1, selon son axe optique 6, est obtenu en vissant ou en dévissant la bague 4.

L'inconvénient majeur de ce montage découle des tolérances d'usinage inévitables de la pièce support 2 et de la bague 4. Sur chacune de ces deux pièces, les axes des surfaces de centrage cylindriques correspondant à la zone de centrage 7, ainsi que les axes des filetage et taraudage correspondant à la liaison 3 de type vis-écrou peuvent être légèrement décalés aussi bien radialement qu'en alignement, du fait des tolérances précitées. Ce problème est généralement accentué par la recherche d'un réglage précis, qui se traduit par l'adoption d'un pas de vis fin pour la liaison 3 de type vis-écrou. Les tolérances de fabrication s'en trouvent resserrées, ce qui tend à augmenter le problème posé par les défauts de position et d'alignement des axes précités.

Un troisième type de montage connu est illustré schématiquement, en coupe longitudinale, sur la figure 3 des dessins annexés.

Dans ce cas, la bague 4 du système optique 1 ne coopère avec la pièce support 2 que par une zone de centrage 7 matérialisée par des surfaces de centrage cylindriques complémentaires, coopérant étroitement entre elles. La surface de centrage cylindrique de la bague 4 est formée dans une partie centrale de celle-ci, entre deux filetages avec lesquels sont en prise un premier écrou 8 et un deuxième écrou 9, respectivement par l'intermédiaire de deux liaisons 3a et 3b de type vis-écrou. Lorsque les écrous 8 et 9 sont bloqués, comme l'illustre la figure 3, ils sont respectivement en butée contre deux faces d'appui opposées de la pièce support 2. En outre, un ressort 10, interposé entre la pièce support 2 et le premier écrou 8, impose au système optique 1 de rester en contact avec le deuxième écrou 9. La rotation de ce deuxième écrou 9 est utilisée pour commander le déplacement du système optique 1 selon son axe optique 6. Le premier écrou 8 sert à bloquer la bague 4 par rapport à l'écrou 9 dans la position finale désirée.

Dans ce montage, il est à noter que le ressort 10 peut être logé indifféremment à l'intérieur de l'un ou l'autre des écrous 8 et 9. Lorsque la position du ressort est inversée par rapport à la description qui précède, la fonction remplie par chacun des écrous est également inversée.

Ce type de montage a principalement pour inconvénient d'être totalement inutilisable lorsque l'accès au dispositif n'est possible que d'un seul côté de celui-ci. En effet, le montage de la figure 3 impose de pouvoir intervenir à tour de rôle sur chacun des écrous 8 et 9, c'est-à-dire de part et d'autre du dispositif.

### Exposé de l'invention

L'invention a précisément pour objet un dispositif de montage d'un système optique permettant de déplacer ce système selon son axe, sans présenter les inconvénients des montages existants.

En particulier, l'invention a pour objet un dispositif de montage permettant d'assurer à la fois les fonctions de réglage et de centrage du système optique sans que les tolérances de fabrication des différentes pièces posent de problème particulier et sans qu'il soit nécessaire de pouvoir accéder aux deux côtés du dispositif.

Conformément à l'invention, ce résultat est obtenu au moyen d'un dispositif de montage d'un système optique, d'axe optique donné, sur une pièce support, avec possibilité de déplacement dudit système optique selon son axe optique, ce dispositif comprenant :
- un système optique incluant une première bague pourvue d'une première surface de centrage ;
- une pièce support pourvue d'une deuxième surface de centrage, coopérant étroitement avec la première surface de centrage ; et
- des moyens de commande dudit déplacement ; dispositif caractérisé en ce que les moyens de commande du déplacement comprennent une deuxième bague, en prise sur la pièce support par une liaison du type vis-écrou, et reliée à la première bague par au moins une liaison à rotule.

Selon un mode de réalisation préféré de l'invention, au moins un premier organe souple est interposé entre la première bague et la deuxième bague, de façon à se déformer lors d'un débattement de la liaison à rotule. Cette caractéristique permet de minimiser le jeu entre les différentes pièces et contribue au freinage de chaque liaison de type vis-écrou prévue dans le dispositif.

Dans un mode de réalisation particulier de l'invention, la première surface de centrage est une surface extérieure cylindrique et la deuxième surface de centrage est un alésage cylindrique de même diamètre que cette surface extérieure cylindrique.

Dans un autre mode de réalisation de l'invention, la première surface de centrage est une surface extérieure sphérique centrée sur l'axe optique et la deuxième surface de centrage est un alésage cylindrique de même diamètre que la surface extérieure sphérique.

Dans ce dernier cas, au moins un deuxième organe souple peut être interposé entre la première bague et l'alésage cylindrique, pour rappeler le système optique vers un état d'alignement de l'axe optique sur l'axe de l'alésage.

Dans certains modes de réalisation de l'invention, la deuxième bague est reliée directement à la première bague par une seule liaison à rotule incluant une rotule portée par l'une des bagues, reçue dans un trou cylindrique pratiqué dans l'autre bague, selon une direction sensiblement perpendiculaire à l'axe optique.

Dans d'autres modes de réalisation de l'invention, les moyens de commande de déplacement comprennent une troisième bague, reliée respectivement à la première bague et la deuxième bague par une première liaison à rotule et par une deuxième liaison à rotule. Ces deux liaisons à rotule sont alors sensiblement centrées sur l'axe optique.

Avantageusement, le système optique inclut au moins une lentille montée dans la première bague.

Enfin, la liaison du type vis-écrou comprend de préférence un filetage formé sur la deuxième bague, en prise dans un taraudage formé dans la pièce support.

### Brève description des dessins

On décrira à présent, à titre d'exemples non limitatifs, différents modes de réalisation de l'invention, en se référant aux dessins annexés, dans lesquels :
- la figure 1, déjà décrite, est une vue en coupe longitudinale illustrant schématiquement un premier type de montage de système optique selon l'art antérieur ;
- la figure 2, déjà décrite, est une vue en coupe longitudinale illustrant schématiquement un deuxième type de montage de système optique selon l'art antérieur ;
- la figure 3, déjà décrite, est une vue en coupe longitudinale illustrant schématiquement un troisième type de montage de système optique selon l'art antérieur ;
- la figure 4 est une vue en coupe longitudinale illustrant schématiquement un premier mode de réalisation d'un dispositif de montage de système optique conforme à l'invention ;
- la figure 5 est une vue en coupe longitudinale illustrant schématiquement un deuxième mode de réalisation d'un dispositif de montage de système optique selon l'invention ; et
- la figure 6 est une vue en coupe longitudinale illustrant schématiquement un troisième mode de réalisation d'un dispositif de montage de système optique conforme à l'invention.

### Description détaillée de différents modes de réalisation préférés de l'invention

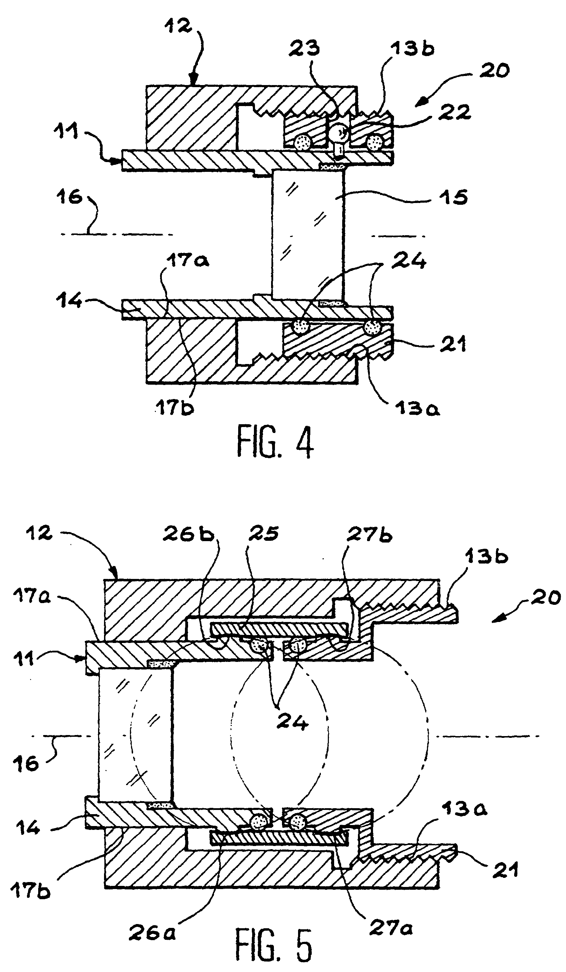

On décrira tout d'abord un premier mode de réalisation de l'invention, en se référant à la figure 4.

Sur cette figure, on a représenté un système optique 11, monté dans une pièce support annulaire 12 par un dispositif de montage conforme à l'invention. Plus précisément, ce dispositif de montage comprend le système optique 11, la pièce support 12, ainsi que des moyens de commande 20, permettant de déplacer le système optique 11 selon son axe optique 16, par rapport à la pièce support 12.

Le système optique 11 peut notamment être un objectif d'appareil optique. Il comprend une bague 14, dite « première bague », ainsi qu'un ou plusieurs éléments optiques, tels qu'une lentille 15. La lentille 15 est fixée dans la première bague 14 selon les techniques habituelles, c'est-à-dire notamment par collage.

La pièce support annulaire 12 présente intérieurement un alésage cylindrique 17a, ainsi qu'un taraudage 13a. L'alésage cylindrique 17a forme une première surface de centrage qui coopère étroitement avec une deuxième surface de centrage matérialisée par la surface extérieure cylindrique 17b de la première bague 14.

Conformément à l'invention, les moyens de commande 20 du déplacement du système optique 11 selon son axe optique 16 comprennent une bague 21, dite « deuxième bague », interposée entre le taraudage 13a et la première bague 14.

De façon plus précise, un filetage 13b est formé sur la surface extérieure cylindrique de la deuxième bague 21, de façon à être en prise avec le taraudage 13a de la pièce support 12, définissant ainsi, avec ce taraudage, une liaison du type vis-écrou.

Par ailleurs, la deuxième bague 21 est reliée à la première bague 14 par une liaison à rotule matérialisée, dans le mode de réalisation représenté, par une rotule sphérique 22 fixée sur la surface extérieure de la première bague 14. La rotule sphérique 22 est logée dans un trou 23, de section circulaire et de même diamètre, traversant radialement sur toute son épaisseur la deuxième bague 21. La fixation de la rotule 22 sur la première bague 14 peut être assurée par tous moyens connus appropriés, tels que par collage, emmanchement à force, etc. A cet effet, la rotule sphérique 22 porte un pion, emboîté dans un trou de la bague 14. Dans la pratique, la rotule 22 est fixée à la première bague 14 au travers du trou 23, après la mise en place de la deuxième pièce 21.

Dans une variante de réalisation non représentée, la rotule 22 et le trou 23 peuvent être inversés. En d'autres termes, la rotule 22 peut être fixée à l'intérieur de la deuxième bague 21 et reçue dans un trou traversant radialement la première bague 14.

La liaison à rotule prévue entre les bagues 14 et 21 permet de relier celles-ci de façon telle que tout mouvement de rotation et de translation de la deuxième bague 21 est intégralement transmis à la première bague 14. Par conséquent, un déplacement du système optique 11, dans l'un ou l'autre sens, peut être obtenu en vissant ou en dévissant la deuxième bague 21 par rapport à la pièce support 12. Cette commande peut être aisément réalisée, même lorsque le dispositif n'est accessible que du côté droit sur la figure 4.

De plus, la liaison à rotule, matérialisée par la rotule 22 et le trou 23, permet au dispositif de s'accommoder d'éventuels défauts de concentricité et/ou d'alignement entre les axes de l'alésage cylindrique 17a et du taraudage 13a. Les contraintes d'usinage de la pièce support 12 s'en trouvent sensiblement réduites par rapport aux dispositifs de montage comparables de l'art antérieur.

Comme on l'a également illustré sur la figure 4, un, ou de préférence, deux organes souples 24 sont avantageusement interposés entre la première bague 14 et la deuxième bague 21. Lorsque deux organes souples sont utilisés, comme représenté sur la figure, ils sont placés de part et d'autre de la rotule 22.

Le ou les organes souples 24 sont, par exemple, des organes toriques réalisés par exemple en caoutchouc ou en matière plastique souple. Ils sont reçus dans des logements complémentaires prévus à cet effet dans la surface intérieure de la deuxième bague 21, de façon à être en permanence en contact avec la surface extérieure cylindrique de la première bague 14. En d'autres termes, les organes souples 24 comblent le jeu qui existe entre les bagues 14 et 16 et se déforment lors du débattement de la liaison à rotule, matérialisée par la rotule 22 et le trou 23. Les organes souples 24 ont donc pour effet, d'une part, de minimiser le jeu entre les différentes pièces de l'assemblage et, d'autre part, de freiner la liaison de type vis-écrou, matérialisée par le taraudage 13a et le filetage 13b.

Un deuxième mode de réalisation du dispositif de montage selon l'invention va à présent être décrit en se référant à la figure 5. Les pièces, ou parties de pièces, comparables à celles du dispositif décrit précédemment en référence à la figure 4 y sont désignées par les mêmes chiffres de référence.

Comme précédemment, le dispositif de montage comprend un système optique 11, définissant un axe optique 16, une pièce support 12, ainsi que des moyens de commande 20 d'un déplacement du système optique parallèlement à son axe optique à l'intérieur de la pièce support 12.

Le système optique 11 comprend, comme précédemment, une première bague 14 dont la surface extérieure cylindrique forme une première surface de centrage 17b, qui coopère étroitement avec un alésage cylindrique 17a de la pièce support 12, matérialisant une deuxième surface de centrage.

Dans le mode de réalisation de la figure 5, les moyens de commande 20 comprennent également une deuxième bague 21, en prise sur la pièce support 12 par une liaison du type vis-écrou, matérialisée par un taraudage 13a de la pièce support 12 et un filetage 13b de la deuxième bague 21.

Le mode de réalisation de la figure 5 diffère du précédent, essentiellement par le fait qu'au lieu d'être relié directement à la première bague 14, par une seule liaison à rotule, la deuxième bague 21 est reliée à une autre bague 25, dite « troisième bague », par une première liaison à rotule. La troisième bague 25 est elle-même reliée à la première bague 14 par une deuxième liaison à rotule.

De façon plus précise, la première bague 14 et la deuxième bague 21 sont placées bout à bout à l'intérieur de la pièce support 12 et chacune de ces bagues présente, sur sa surface extérieure et dans une partie située à proximité de l'autre bague, une zone sphérique centrée sur l'axe de la bague correspondante. Ainsi, la première bague 14 comporte une zone sphérique 26a centrée sur l'axe optique 16 et la deuxième bague 21 comporte une zone sphérique 27a, centrée sur l'axe de cette bague. La troisième bague 25 entoure les parties adjacentes des bagues 14 et 21, et notamment les zones sphériques 26a et 27a formées sur celles-ci. Plus précisément, des zones sphériques complémentaires 26b et 27b sont usinées en creux à l'intérieur de la troisième bague 25, de façon à recevoir respectivement les zones sphériques 26a et 27a.

Les zones sphériques complémentaires 26a et 26b matérialisent ainsi la première liaison à rotule entre les bagues 14 et 25, et les zones sphériques complémentaires 27a et 27b matérialisent la deuxième liaison à rotule entre les bagues 25 et 21.

Dans le mode de réalisation qui vient d'être décrit, le montage des zones sphériques 26a et 27a à l'intérieur des zones sphériques complémentaires 26b et 27b, peut être obtenu notamment en utilisant une bague 25 fendue ou formée de plusieurs parties assemblées de façon démontable.

Dans le mode de réalisation de la figure 5, la présence de la troisième bague 25 est imposée par le fait qu'on utilise dans ce cas des liaisons à rotule centrées sur l'axe optique et n'autorisant aucun débattement radial. L'existence d'un défaut éventuel de concentricité entre l'alésage cylindrique 17a et le taraudage 13a ne serait donc pas pris en compte si une telle liaison à rotule était formée directement entre les bagues 14 et 21.

Le fonctionnement et les avantages du dispositif de montage de la figure 5 sont identiques à ceux du dispositif décrit précédemment, en se référant à la figure 4.

Dans le mode de réalisation illustré sur la figure 5, le dispositif comporte également deux organes souples 24. L'un de ces organes est interposé entre la première bague 14 et la troisième bague 25 et le deuxième organe souple est interposé entre la troisième bague 25 et la deuxième bague 21.

Dans le mode de réalisation illustré sur la figure 5, les organes souples 24 sont réalisés dans le même matériau et ont la même forme que dans le mode de réalisation de la figure 4. Ils sont montés dans des logements complémentaires formés dans la surface extérieure respective de chacune des bagues 14 et 21, entre les zones sphériques 26a et 27a, de façon à être en contact permanent avec la surface intérieure de la troisième bague 25.

Comme dans le mode de réalisation précédent, les organes souples 24 ont pour fonction de minimiser le jeu entre les différentes pièces et de freiner la liaison de type vis-écrou formée par le taraudage 13a et le filetage 13b.

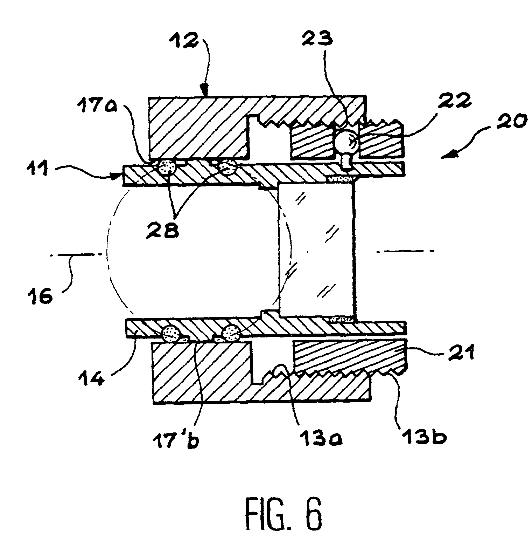

On décrira à présent, en se référant à la figure 6, un troisième mode de réalisation de l'invention. Sur cette figure, les mêmes chiffres de référence sont utilisés pour désigner des pièces et des parties de pièces comparables à celles qui ont été décrites en référence aux figures 4 et 5.

Le dispositif de montage illustré sur la figure 6 comprend, comme précédemment, un système optique 11, une pièce support 12, ainsi que des moyens de commande 20 d'un déplacement du système optique 11 selon son axe optique 16 à l'intérieur de la pièce support 12. Le système optique 11 comprend notamment une première bague 14.

Pour l'essentiel, les moyens de commande 20 sont identiques à ceux qui ont été décrits en se référant à la figure 4. Ainsi, ces moyens de commande comprennent une deuxième bague 21 qui coopère avec la pièce support 12 par une liaison du type vis-écrou, matérialisée par un taraudage 13a formé dans la pièce support et par un filetage 13b usiné sur la deuxième bague 21. Par ailleurs, la deuxième bague 21 est reliée directement à la première bague 14 par une seule liaison à rotule, matérialisée par une rotule 22 fixée sur la surface extérieure de la première bague 14 et reçue dans un trou cylindrique 23 traversant radialement la deuxième bague 21.

Le mode de réalisation de la figure 6 diffère essentiellement de celui de la figure 4 par la nature des moyens utilisés pour assurer le centrage de la première bague 14 dans la pièce support 12. Dans le cas de la figure 6, ces moyens de centrage sont matérialisés par une surface extérieure sphérique 17'b, usinée sur la surface extérieure de la première bague 14 et formant une première surface de centrage. La surface extérieure sphérique 17'b coopère étroitement avec une deuxième surface de centrage, matérialisée par un alésage cylindrique 17a usiné dans la pièce support 12. De façon plus précise, la surface extérieure sphérique 17'b usinée sur la première bague 14 est centrée sur l'axe optique 16 du système optique 11, de façon à assurer un guidage rotulant de la première bague 14 à l'intérieur de la pièce support 12.

Dans ce cas, et comme on l'a également illustré sur la figure 6, au moins un et, de préférence, deux organes souples 28 sont associés aux moyens de guidage, de façon à rappeler automatiquement le système optique 11 vers un état d'alignement de son axe optique 16 sur l'axe de l'alésage 17a.

Les organes souples 28 peuvent être réalisés dans le même matériau et avec les mêmes caractéristiques que les organes souples 24 décrits précédemment. Comme l'illustre la figure 6, ils sont avantageusement logés dans des évidements complémentaires formés sur la surface extérieure de la première bague 14, de part et d'autre de la surface extérieure sphérique 17'b. De plus, ils sont en contact permanent avec l'alésage cylindrique 17a de la pièce support 12.

Dans le mode de réalisation de la figure 6, des pièces souples, analogues aux pièces 24 sur la figure 4, peuvent aussi être interposées entre les bagues 14 et 21. Toutefois, la présence de telles pièces n'est pas indispensable, de telle sorte qu'elles peuvent être omises, comme on l'a illustré sur la figure 6.

Les trois modes de réalisation de l'invention, qui viennent d'être décrits, ne constituent que des exemples non limitatifs. En particulier, la ou les liaisons à rotule interposées entre la première et la deuxième bague, ainsi que les formes données à ces bagues peuvent subir de nombreuses variantes sans sortir du cadre de l'invention défini par les revendications annexées.

## Revendications

1. Dispositif de montage d'un système optique (11), d'axe optique (16) donné, sur une pièce support (12), avec possibilité de déplacement dudit système optique selon son axe optique (16), ce dispositif comprenant :
- un système optique (11) incluant une première bague (14) pourvue d'une première surface de centrage (17b) ;
- une pièce support (12) pourvue d'une deuxième surface de centrage (17a), coopérant étroitement avec la première surface de centrage ; et
- des moyens de commande (20) dudit déplacement ;
dispositif **caractérisé en ce que** les moyens de commande du déplacement comprennent une deuxième bague (21), en prise sur la pièce support (12) par une liaison (13a, 13b) du type vis-écrou, et reliée à la première bague (14) par au moins une liaison à rotule (22, 23, 26a, 26b, 27a, 27b) configurée de telle façon que tout mouvement de rotation et de translation de la deuxième bague (21) est intégralement transmis à la première bague (14).

2. Dispositif selon la revendication 1, dans lequel au moins un premier organe souple (24) est interposé entre la première bague (14) et la deuxième bague (21), de façon à se déformer lors d'un débattement de la liaison à rotule (13a, 13b).

3. Dispositif selon l'une quelconque des revendications 1 et 2, dans lequel la première surface de centrage est une surface extérieure cylindrique (17b) et la deuxième surface de centrage est un alésage cylindrique (17a) de même diamètre que la surface extérieure cylindrique.

4. Dispositif selon l'une quelconque des revendications 1 et 2, dans lequel la première surface de centrage est une surface extérieure sphérique (17'b) centrée sur l'axe optique (16) et la deuxième surface de centrage est un alésage cylindrique (17a), de même diamètre que la surface extérieure sphérique.

5. Dispositif selon la revendication 4, dans lequel au moins un deuxième organe souple (28) est interposé entre la première bague (14) et l'alésage cylindrique (17a), pour rappeler le système optique (11) vers un état d'alignement de l'axe optique sur l'axe de l'alésage.

6. Dispositif selon l'une quelconque des revendications précédentes, dans lequel la deuxième bague (21) est reliée directement à la première bague (14) par une seule liaison à rotule incluant une rotule (22) portée par l'une desdites bagues, reçue dans un trou cylindrique (23) pratiqué dans l'autre bague, selon une direction sensiblement perpendiculaire à l'axe optique (16).

7. Dispositif selon l'une quelconque des revendications 1 à 3, dans lequel lesdits moyens de commande (20) de déplacement comprennent une troisième bague (25), reliée respectivement à la première bague (14) et à la deuxième bague (21) par une première liaison à rotule (26a, 26b) et par une deuxième liaison à rotule (27a, 27b), lesdites première et deuxième liaisons à rotules étant sensiblement centrées sur l'axe optique (16).

8. Dispositif selon l'une quelconque des revendications précédentes, dans lequel le système optique (11) inclut également au moins une lentille (15) montée dans la première bague (14).

9. Dispositif selon l'une quelconque des revendications précédentes, dans lequel la liaison du type vis-écrou comprend un filetage (13b) formé sur la deuxième bague (21), en prise dans un taraudage (13a) formé dans la pièce support (12).

## Claims

1. A mounting device for an optical system (11), with a given optical axis (16) on a support member (12), with the possibility of displacing said optical system along its optical axis (16), this device comprising:
- an optical system (11) including a first ring (14) provided with a first centring surface (17b);
- a support member (12) provided with a second centring surface (17a), cooperating closely with the first centring surface; and
- means (20) of controlling said displacement;
said device **characterized in that** the means of controlling the displacement comprise a second ring (21) engaged with the support member (12) through a nut and screw type of linkage (13a, 13b), and connected to the first ring (14) by at least one ball joint (22, 23, 26a, 26b, 27a, 27b), configured in such a way that any rotary and translatory movement of the second ring (21) is integrally transmitted to the first ring (14).

2. A device according to claim 1, in which at least one first flexible component (24) is positioned between the first ring (14) and the second ring (21), in such a way as to be deformed when the ball joint (13a, 13b) is moved.

3. A device according to either one of claims 1 and 2, in which the first centring surface is an external cylindrical surface (17b) and the second centring surface is a cylindrical bore (17a) of the same diameter as the external cylindrical surface.

4. A device according to either one of claims 1 and 2, in which the first centring surface is an external spherical surface (17'b) centred on the optical axis (16) and the second centring surface is a cylindrical bore (17a) of the same diameter as the external spherical surface.

5. A device according to claim 4, in which at least one second flexible component (28) is positioned between the first ring (14) and the cylindrical bore (17a) in order to return the optical system (11) towards a state of alignment of the optical axis onto the axis of the bore.

6. A device according to any one of the preceding claims, in which the second ring (21) is directly connected to the first ring (14) by a single ball joint that includes a ball (22) supported by one of said rings, received in a cylindrical hole (23) made in the other ring, in a direction substantially perpendicular to the optical axis (16).

7. A device according to any one of claims 1 to 3, in which said means (20) of controlling the displacement comprise a third ring (25), connected respectively to the first ring (14) and to the second ring (21) by a first ball joint (26a, 26b) and by a second ball joint (27a, 27b), said first and second ball joints being substantially centred on the optical axis (16).

8. A device according to any one of the preceding claims, in which the optical system (11) also includes at least one lens (15) mounted in the first ring (14).

9. A device according to any one of the preceding claims, in which the nut and screw type linkage comprises a thread (13b) formed in the second ring (21), that engages a tapped thread (13a) formed in the support member (12).

## Patentansprüche

1. Vorrichtung zur Montage eines optischen Systems (11) mit gegebener optischer Achse (16) auf einem Tragelement (12) mit der Möglichkeit der Verlagerung des optischen Systems entlang seiner optischen Achse (16), wobei diese Vorrichtung umfasst:
- ein optisches System (11), umfassend einen ersten Ring (14), der mit einer ersten Zentrierfläche (17b) versehen ist;
- ein Tragelement (12), das mit einer zweiten Zentrierfläche (17a) versehen ist, die eng mit der ersten Zentrierfläche zusammenwirkt; und
- Mittel zur Steuerung (20) der Verlagerung;
wobei die Vorrichtung **dadurch gekennzeichnet ist, dass** die Mittel zur Steuerung der Verlagerung einen zweiten Ring (21) umfassen, der mittels einer Verbindung (13a, 13b) vom Typ Schraube-Mutter in Eingriff mit dem Tragelement (12) ist und mit dem ersten Ring (14) durch wenigstens eine Kugelverbindung (22, 23, 26a, 26b, 27a, 27b) verbunden ist, welche derart beschaffen ist, dass jede Rotations- und Translationsbewegung des zweiten Rings (21) vollständig auf den ersten Ring (14) übertragen wird.

2. Vorrichtung nach Anspruch 1, bei der wenigstens ein erstes flexibles Organ (24) derart zwischen den ersten Ring (14) und den zweiten Ring (21) zwischengefügt ist, dass es sich bei einem Ausschlagen der Kugelverbindung (13a, 13b) verformt.

3. Vorrichtung nach einem der Ansprüche 1 und 2, bei der die erste Zentrierfläche eine zylindrische Außenfläche (17b) und die zweite Zentrierfläche eine zylindrische Bohrung (17a) mit gleichem Durchmesser wie die zylindrische Außenfläche ist.

4. Vorrichtung nach einem der Ansprüche 1 und 2, bei der die erste Zentrierfläche eine kugelförmige äußere Fläche (17'b) ist, die auf der optischen Achse (16) zentriert ist, und die zweite Zentrierfläche eine zylindrische Bohrung (17a) mit gleichem Durchmesser wie die kugelförmige äußere Fläche ist.

5. Vorrichtung nach Anspruch 4, bei der wenigstens ein zweites flexibles Organ (28) zwischen den ersten Ring (14) und die zylindrische Bohrung (17a) zwischengefügt ist, um das optische System (11) in einen Zustand der Ausrichtung der optischen Achse auf der Achse der Bohrung zurückzustellen.

6. Vorrichtung nach einem der vorhergehenden Ansprüche, bei der der zweite Ring (21) direkt mit dem ersten Ring (14) mittels einer einzigen Kugelverbindung verbunden ist, die eine Kugel (22) umfasst, welche von einem der Ringe getragen wird und in einem zylindrischen Loch (23) aufgenommen ist, das im anderen Ring in einer Richtung vorgesehen ist, die im Wesentlichen orthogonal zur optischen Achse (16) ist.

7. Vorrichtung nach einem der Ansprüche 1 bis 3, bei der die Mittel zur Steuerung (20) der Verlagerung einen dritten Ring (25) umfassen, der durch eine erste Kugelverbindung (26a, 26b) und durch eine zweite Kugelverbindung (27a, 27b) mit dem ersten Ring (14) bzw. dem zweiten Ring (21) verbunden ist, wobei die erste und die zweite Kugelverbindung im Wesentlichen auf der optischen Achse (16) zentriert sind.

8. Vorrichtung nach einem der vorhergehenden Ansprüche, bei der das optische System (11) ferner wenigstens eine im ersten Ring (14) montierte Linse (15) enthält.

9. Vorrichtung nach einem der vorhergehenden Ansprüche, bei der die Verbindung vom Typ Schraube-Mutter ein auf dem zweiten Ring (21) gebildetes Außengewinde (13b) umfasst, das in Eingriff in einem im Tragelement (12) gebildeten Innengewinde (13a) ist.
